# EUROPÄISCHE PATENTSCHRIFT

(11) **EP 3 468 769 B1**
(45) Veröffentlichungstag und Bekanntmachung des Hinweises auf die Patenterteilung: **09.06.2021**
(21) Anmeldenummer: 17721347.7
(22) Anmeldetag: 24.04.2017
(51) Int. Cl.: B29C 49/64, B65B 27/04, B29C 49/06, B29K 67/00, B29L 31/00

(54) **VERFAHREN UND VORRICHTUNG ZUM HERSTELLEN EINES GEBINDES SOWIE GEBINDE**
METHOD AND DEVICE FOR PRODUCING A MULTIPACK AND MULTIPACK
PROCÉDÉ ET DISPOSITIF PERMETTANT DE FABRIQUER UNE UNITÉ D'EMBALLAGE, AINSI QU'UNITÉ D'EMBALLAGE

(30) Priorität: 08.06.2016 DE 102016110600
(43) Veröffentlichungstag der Anmeldung: 17.04.2019
(73) Patentinhaber: KHS GmbH, 44143 Dortmund (DE); KHS Corpoplast GmbH, 22145 Hamburg (DE)
(72) Erfinder: ZAHN, Volker, 34471 Volkmarsen (DE); WIESE, Arne-Fritz, 22926 Ahrensburg (DE)
(86) Internationale Anmeldenummer: PCT/EP2017/059678
(87) Internationale Veröffentlichungsnummer: WO 2017/211499

(56) Entgegenhaltungen:
- EP-A2- 0 293 147
- DE-A1-102008 041 575
- DE-A1-102013 105 428
- DE-B3-102011 119 966
- FR-A1- 2 224 278

## Beschreibung

Die Erfindung betrifft ein Verfahren zum Herstellen eines Gebindes mit mindestens zwei Behältern, wobei mindestens ein Behälter einen verstärkten Wandabschnitt aufweist. Weiterhin betrifft die Erfindung eine Vorrichtung zum Herstellen eines solchen Gebindes, umfassend eine Vorrichtung zum Erhitzen von Vorformlingen, eine Streckblasvorrichtung zum Herstellen von Behältern aus den erhitzten Vorformlingen, eine Vorrichtung zum Auftragen eines Klebstoffs zum Erzeugen wenigstens eines Klebepunktes an den Behältern sowie Mittel zum Zusammenfügen der Behälter mittels des Klebepunktes zu einem Gebinde. Schließlich betrifft die Erfindung auch ein Gebinde aufweisend mindestens zwei Behälter mit jeweils einer Behälterwand, wobei die zwei Behälter durch eine Klebestelle miteinander verbunden sind.

Verfahren und Vorrichtungen zur Herstellung eines Gebindes sowie entsprechende Gebinde sind in vielfältiger Ausgestaltung aus dem Stand der Technik bekannt. Entsprechende Gebinde sowie Verfahren und Vorrichtungen zu deren Herstellung werden beispielsweise zur Verpackung von Getränken in Kunststoffbehältern, insbesondere Kunststoffleichtflaschen verwendet, wobei die Gebinde typischerweise durch sechs miteinander verklebte Kunststoffflaschen gebildet werden.

Aus der Druckschrift DE 10 2011 119 966 B3 ist bereits eine Behandlungsvorrichtung für Behälter zur Herstellung von Gebinden mittels einer Verklebung der einzelnen Behälter bekannt. Weiterhin offenbart die Druckschrift DE 10 2013 105 428 A1 ebenfalls ein Verfahren zur Herstellung von Gebinden, wobei wenigstens zwei unterschiedlich ausgebildete Klebstoffe zum Zusammenfügen mehrerer Behälter zu einem Gebinde eingesetzt werden.

Schließlich ist aus der Druckschrift EP 0 293 147 A2 ein Vorformling zum Gebrauch in einem Blasformprozess zum Herstellen eines einteiligen Kunststoffbehälters durch Expandieren bekannt, wobei der bodenformende Teil des Vorformlings einen ringförmigen verdickten Teil umfasst, der nach dem Expandieren einen Teil eines verstärkten Randwulstes des Kunststoffbehälters bildet.

Die Behälter eines geklebten Gebindes, das mittels eines aus dem Stand der Technik bekannten Verfahrens bzw. einer aus dem Stand der Technik bekannten Vorrichtung hergestellt wurde, müssen jedoch, um eine Beschädigung der Behälter beim Abtrennen aus dem Gebinde zu verhindern, eine bestimmte Mindest-Wandstärke aufweisen, die den notwendigen Materialverbrauch des Behälters sowie sein Gewicht bestimmt. Insbesondere ist mit den aus dem Stand der Technik bekannten Verfahren eine Herstellung eines geklebten Gebindes aus besonders dünnwandigen Kunststoffleichtflaschen nicht möglich.

Des Weiteren ist auch eine Verstärkung lediglich eines Teils einer Kunststoffflasche aus dem Stand der Technik bekannt. Jedoch sind die aus dem Stand der Technik bekannten Verfahren entweder aufwändig und somit teuer oder sie setzen eine aufwändige Form des Vorformlings mit Bereichen unterschiedlicher Wandstärke voraus.

Darüber hinaus weisen die aus dem Stand der Technik bekannten Behälter den Nachteil auf, dass sich in den Behälterwänden mechanische Spannungen aufbauen, wenn die Behälter mit kohlensäurehaltigen Flüssigkeiten gefüllt werden, wodurch die Stabilität der Behälterwand verringert wird und es zu einem Bruch der Behälterwand bei einem Heraustrennen des Behälters aus einem geklebten Gebinde kommen kann.

Der Erfindung liegt daher die Aufgabe zu Grunde, ein einfaches Verfahren und eine Vorrichtung zum Herstellen eines geklebten Gebindes sowie solch ein Gebinde bereitzustellen, wobei das Verfahren die Herstellung eines Gebindes aus miteinander verklebten Behältern in besonders einfacher Weise ermöglicht und das Gebinde ein besonders geringes Gewicht aufweist sowie besonders haltbar gegenüber einer Beschädigung der Behälter beim Abtrennen eines, insbesondere mit einer kohlensäurehaltigen Flüssigkeit befüllten Behälters aus dem Gebinde ist.

Die Aufgabe wird erfindungsgemäß durch ein Verfahren gemäß Anspruch 1, eine Vorrichtung gemäß Anspruch 11 sowie ein Gebinde gemäß Anspruch 14 gelöst. Vorteilhafte Weiterbildungen der Erfindung sind in den abhängigen Ansprüchen angegeben.

Das erfindungsgemäße Verfahren zum Herstellen eines Gebindes mit mindestens zwei Behältern, wobei mindestens ein Behälter einen verstärkten Wandabschnitt aufweist, umfasst als Verfahrensschritte zunächst das Bereitstellen eines Vorformlings für einen Behälter, gefolgt von einem Erhitzen des Vorformlings sowie einem Kühlen mindestens eines Teilbereichs des Vorformlings. Anschließend erfolgt das Herstellen eines ersten Behälters aus dem Vorformling, wobei der erste Behälter einen aus dem gekühlten Teilbereich des Vorformlings gebildeten verstärkten Wandabschnitt aufweist. Nachfolgend wird ein Klebstoff zum Erzeugen wenigstens eines Klebepunktes im Bereich des verstärkten Wandabschnitts des ersten Behälters aufgetragen sowie ein Gebinde durch Festlegen eines zweiten Behälters an dem wenigstens einen Klebepunkt des ersten Behälters gebildet.

Mittels des erfindungsgemäßen Verfahrens kann in besonders einfacher Weise ein Gebinde gebildet werden, dessen Behälter eine besonders geringe Wandstärke aufweisen, wobei die Behälter im Bereich der Verklebung einen in besonders einfacher Weise hergestellten verstärkten Wandabschnitt aufweisen. Dabei wird einerseits das Bedürfnis berücksichtigt, die Materialstärke der Behälter des Gebindes möglichst gering zu halten, um Material zu sparen und das Gewicht des Gebindes so klein wie möglich zu halten. Andererseits ist der Behälter aufgrund des verstärkten Wandabschnitts ausreichend stabil, um während der Benutzung und insbesondere während des Trennens von miteinander verklebten Behältern des Gebindes nicht beschädigt zu werden.

Außerdem wird die Gesamtstabilität des Behälters in vorteilhafter Weise dadurch erhöht, dass die nicht-verstärkten Wandabschnitte des mit einer kohlensäurehaltigen Flüssigkeit befüllten Behälters als Druckentlastung des erhöhten Innendrucks fungieren. Dabei kommt es auch zu einer Verringerung der mechanischen Spannungen im verstärkten Bereiche des Behälters, wodurch der Behälter insgesamt stabiler gegenüber von außen wirkenden Kräften, beispielsweise beim Abtrennen eines Behälters aus einem verklebten Gebinde wird.

Die erfindungsgemäße Vorrichtung zum Herstellen eines Gebindes mit mindestens zwei Behältern, insbesondere nach dem erfindungsgemäßen Verfahren, weist eine Vorrichtung zum Erhitzen von Vorformlingen, eine Streckblasvorrichtung zum Herstellen von Behältern aus den erhitzten Vorformlingen, eine Vorrichtung zum Auftragen eines Klebstoffs zum Erzeugen wenigstens eines Klebepunkts an den Behältern sowie Mittel zum Zusammenfügen der Behälter mittels des Klebepunkts zu einem Gebinde auf, wobei sich die erfindungsgemäße Vorrichtung insbesondere dadurch auszeichnet, dass wenigstens eine Gasdüsenanordnung der erfindungsgemäßen Vorrichtung derart gestaltet und/oder angeordnet ist, dass damit wenigstens eine Kühlzone zur Kühlung eines Teilbereichs eines erhitzten Vorformlings gebildet wird.

Die erfindungsgemäße Vorrichtung ermöglicht dabei die Verwendung nahezu beliebiger Vorformlinge zur Herstellung von Behältern, wobei in besonders einfacher Weise durch die Anordnung einer oder mehrerer Kühlzonen die Position und Materialstärke der verstärkten Wandabschnitte am fertigen Behälter angepasst werden kann.

Das erfindungsgemäße Gebinde, insbesondere hergestellt nach dem erfindungsgemäßen Verfahren und/oder mittels der erfindungsgemäßen Vorrichtung, weist mindestens zwei Behälter mit jeweils einer Behälterwand auf, wobei jeweils zwei Behälter durch mindestens eine Klebestelle miteinander verbunden sind und wobei die Behälterwand mindestens eines Behälters, bevorzugt aller Behälter, im Bereich der Klebestelle einen verstärkten Wandabschnitt aufweist, der durch einen gekühlten Teilbereich eines Vorformlings gegenüber dem restlichen Vorformling beim Herstellen des Behälters, insbesondere durch Streckblasen, gebildet wurde.

Daraus ergibt sich zunächst der Vorteil gegenüber den Gebinden des Standes der Technik, dass die erfindungsgemäß erhaltenen Behälter ein besonders geringes Gewicht bei zugleich besonders hoher Stabilität, insbesondere im Bereich der Klebestelle aufweisen. Weiterhin sind die aus einem Vorformling mit wenigstens einem gekühlten Teilbereich hergestellten Behälter auch deutlich stabiler als Behälter mit verstärkten Wandabschnitten, die aus einem gleichmäßig erhitzten Vorformling mit Bereichen unterschiedlicher Wandstärke hergestellt wurden, da bei dem erfindungsgemäßen Vorformling die unterschiedlichen Temperaturen der verschiedenen Teilbereiche zu einer unterschiedlichen Materialverformung beim Herstellen, insbesondere durch Streckblasen, führen, wobei die Kunststoffmoleküle in den verstärkten Wandabschnitten der erfindungsgemäßen Behälter gegenüber den übrigen Bereichen des Behälters eine abweichende Struktur des Materials, insbesondere Ausrichtung und Ordnung der Kunststoffmoleküle aufweisen.

Als Gebinde wird zunächst jede Anordnung von wenigstens zwei Behältern, bevorzugt wenigstens vier und besonders bevorzugt wenigstens sechs Behältern verstanden, bei der die Behälter in einer vorbestimmten Position räumlich zueinander festgelegt sind. Dabei können die Behälter grundsätzlich unmittelbar, beispielsweise mittels einer Verklebung aneinander angeordnet, aber auch über ein weiteres Element miteinander verbunden sein. Weiterhin kann ein Gebinde durch eine stoffschlüssige Verbindung und/oder auch durch eine kraftschlüssige Verbindung, beispielsweise durch Umgeben mit einem Material, insbesondere durch Einschweißen in eine Folie gebildet sein. Die Behälter des Gebindes sind vorzugsweise in nicht-nestender Position angeordnet, das heißt, die Behälter einer Reihe des Gebindes sind nicht in der Lücke einer benachbarten Reihe des Gebindes angeordnet.

Behälter im Sinne der Erfindung sind Flaschen, Dosen, Tuben, Beutel, jeweils aus Metall, Glas, Kunststoff und/oder einem Materialverbund, z.B. PET-Flaschen oder ein Materialverbund aus Kunststoff, Aluminiumfolie und Papier. Behälter im Sinne der Erfindung umschließen grundsätzlich ein Volumen im Wesentlichen allseitig und weisen typischerweise wenigstens eine Entnahmeöffnung auf. Bevorzugt sind die erfindungsgemäßen Behälter zur Aufnahme bzw. zum Abfüllen von flüssigen oder viskosen Produkten geeignet. Auch bereits zu Gruppen zusammengefasste Behälter (Mehrfachpacks) zählen zu den Behältern im Sinne der Erfindung.

Die erfindungsgemäßen Behälter können einen beliebigen Querschnitt aufweisen, beispielsweise oval, rund oder eckig sein. Die Form der Behälter kann beutel-, pyramiden- oder quaderförmig sein, ist aber häufig zylindrisch, entweder vollständig zylindrisch, wie z. B. bei Dosen, oder abschnittsweise zylindrisch, wie bei vielen Flaschen, die sich, ausgehend von einem zylindrischen Grundkörper, zur Öffnung hin verjüngen und/oder bei denen die Flasche am unteren Ende nur auf punktförmigen Stützbereichen steht, und bei denen dann die Flaschenwand an Übergangsabschnitten von den punktförmigen Stützbereichen zum Grundkörper hin in die zylindrische Flaschenwand übergeht. Ein Behälter weist eine Höhe auf, die gemessen wird vom unteren Ende, mit dem der Behälter auf einer Auflagefläche steht, bis zu einem oberen Ende, das in senkrechter Richtung am weitesten von der Auflagefläche entfernt ist, und das meist die Öffnung des Behälters aufweist. Entsprechend wird als Durchmesser oder Breite des Behälters die Ausdehnung senkrecht zur Höhe verstanden.

Weiterhin erfindungsgemäß weisen die Behälter einen verstärkten Wandabschnitt auf. Als Wandabschnitt wird dabei zunächst ein beliebiger Abschnitt der Wandung des Behälters verstanden. Insbesondere ist der Wandabschnitt ein Teil des Grundkörpers des Behälters und somit weder Teil einer Auflagefläche noch im Bereich der Öffnung des Behälters angeordnet. Dabei kann ein Wandabschnitt sowohl ein den Behälter vollständig umgebender Bereich sein oder aber nur ein Teil des Umfangs des Behälters ausmachen.

Unter einem verstärkten Wandabschnitt wird grundsätzlich ein Bereich der Wandung des Behälters verstanden, der gegenüber der übrigen Behälterwandung, insbesondere aber wenigstens gegenüber der den verstärkten Wandabschnitt umgebenden Behälterwandung, eine erhöhte Materialstärke aufweist. Unter einem verstärkten Wandabschnitt wird insbesondere ein Abschnitt der Wandung des Behälters verstanden, der gegenüber der übrigen, den Grundkörper des Behälters bildenden Wandung eine größere Materialstärke aufweist. Weiterhin können eine Auflagefläche oder der Bereich einer Öffnung des Behälters verstärkt ausgebildet sein, d.h., gegenüber der übrigen Wandung des Behälters eine erhöhte Materialstärke aufweisen.

Idealerweise ist wenigstens ein verstärkter Wandabschnitt in dem Bereich des Behälters mit dem größten Durchmesser bzw. der größten Breite angeordnet oder der Bereich mit dem größten Durchmesser ergibt sich durch den verstärkten Wandabschnitt. Bevorzugt umgibt ein verstärkter Wandabschnitt den Behälter vollständig und bildet insbesondere entlang der Höhe des Behälters einen Abschnitt mit gleichbleibender Höhe.

Unter dem Erhitzen des Vorformlings wird zunächst jeder Prozess verstanden, bei dem das Material des Vorformlings bis zur Formbarkeit erhitzt wird, insbesondere bis es ausreichend zähflüssig zum Formen mittels Blasformen bzw. Streckblasen geworden ist. Bevorzugt wird beim Erhitzen der gesamte Vorformling erwärmt. Insbesondere bevorzugt werden dabei Temperaturen von 90 bis 120 °C erreicht. Grundsätzlich kann das Erhitzen zunächst in beliebiger Weise erfolgen, wobei der Vorformling bevorzugt dabei durch eine Heizvorrichtung, beispielsweise einen Ofen oder eine Anordnung von Infrarot-Strahlern, bewegt wird. Darüber hinaus ist jedoch auch eine separate Erhitzung jedes einzelnen Vorformlings denkbar.

Unter dem Kühlen im Sinne der vorliegenden Erfindung wird eine gezielte bzw. aktive Senkung der Temperatur verstanden, mittels der die Temperatur des zu kühlenden Materials schneller bzw. stärker gesenkt wird, als ein Abkühlen bei Umgebungstemperatur erfolgen würde. Bevorzugt wird dazu ein zu kühlender Teilbereich eines Vorformlings mit einer Kühlvorrichtung oder einem Kühlmedium in Kontakt gebracht. Bevorzugt erfolgt das Kühlen kontaktlos, d.h., mittels eines gasförmigen Kühlmediums. Insbesondere werden zum Kühlen räumlich definierte Kühlzonen, beispielsweise durch die Anordnung von Gasdüsen für ein Kühlmedium gebildet, wobei der Vorformling besonders bevorzugt durch die Kühlzone bewegt wird. In jedem Fall führt das erfindungsgemäße Kühlen dazu, dass ein Teilbereich des Vorformlings eine gegenüber dem übrigen Vorformling geringere Temperatur aufweist.

Grundsätzlich kann dabei der Vorformling zunächst erhitzt und anschließend ein oder mehrere Teilbereiche des Vorformlings gekühlt werden. Alternativ kann aber auch ein Erhitzen des gesamten Vorformlings sowie ein Kühlen eines Teilbereichs des Vorformlings zugleich erfolgen. Bevorzugt wird der gesamte Vorformling, beispielsweise mittels eines Ofens oder einer mittels Infrarotstrahlern gebildeten Heizstrecke, erhitzt und zugleich durch in diesem Bereich angeordnete Kühlmittel, die eine Kühlzone niedrigerer Temperatur bilden, ein Teilbereich des Vorformlings gekühlt bzw. weniger stark erhitzt.

Unter einem Vorformling mit mindestens einem gekühlten Teilbereich wird ein Zustand des Vorformlings verstanden, bei dem dieser wenigstens zwei Bereiche zweier unterschiedlicher Temperaturen aufweist, nämlich einen räumlichen Bereich geringerer Temperatur sowie den übrigen Teil des Vorformlings mit einer höheren Temperatur. Darüber hinaus kann der Vorformling auch in mehreren Teilbereichen gekühlt werden, so dass sich entsprechend mehr Bereiche unterschiedlicher Temperaturen bilden, wobei sämtliche gekühlten Teilbereiche dabei sowohl in etwa die gleiche Temperatur, als auch unterschiedliche Temperaturen haben können, die jedoch grundsätzlich niedriger sind als ungekühlte Bereiche des Vorformlings. Grundsätzlich erfolgt jedoch nur die gezielte und/oder gesteuerte Kühlung eines Teilbereichs des Vorformlings und nicht des gesamten Vorformlings. Besonders bevorzugt werden zwei entlang der Höhe des Vorformlings übereinander angeordnete und voneinander durch einen ungekühlten Teilbereich getrennte Teilbereiche des Vorformlings gekühlt, wobei ganz besonders bevorzugt beide gekühlten Teilbereiche im Wesentlichen die gleiche Temperatur aufweisen.

Grundsätzlich muss ein gekühlter Teilbereich jedoch nicht über seine gesamte Ausdehnung, insbesondere über die gesamte Höhe des Teilbereichs am Vorformling, eine gleichbleibende Temperatur aufweisen. Vielmehr ergibt sich durch Wärmeflüsse zwischen einem gekühlten Teilbereich und dem übrigen Vorformling ein kontinuierlicher Temperaturübergang. Daher wird unter der Temperatur eines gekühlten Teilbereichs grundsätzlich die niedrigste Temperatur in diesem Teilbereich verstanden.

Unter dem Herstellen des Behälters im Sinne der Erfindung wird der Prozess verstanden, bei dem aus einem Vorformling der Behälter, insbesondere durch Blasformen, gebildet wird. Besonders bevorzugt erfolgt die Herstellung durch Streckblasen in einer Streckblasmaschine oder durch Herstellung in einer Form-Fill-Maschine.

Ein Klebstoff im Sinne der Erfindung ist zunächst ein beliebiger Werkstoff, d.h., alle Substanzen, Materialien oder Massen, die zum Herstellen einer Klebeverbindung zwischen Behältern geeignet sind, insbesondere aber solche Werkstoffe, Materialien oder Massen, die im flüssigen oder zähflüssigen Zustand aufgebracht einen Klebepunkt bilden. Erfindungsgemäße Klebstoffe sind aber auch solche Werkstoffe, Materialien oder Massen, die durch Energieeintrag, z.B. durch Aufbringen von Druck, Strahlung oder Temperatur oder mittels chemischem Aushärten bzw. Vernetzen eine Klebeverbindung bilden können. Typische Klebstoffe sind UV-härtende Klebstoffe, die auch in niedrigviskosem Zustand verarbeitet und durch Strahlung ausgehärtet werden können, oder ein Heißleim, der nach dem Auftragen abkühlt, und der unterhalb einer materialtypischen Temperatur seine Klebkraft verliert, so dass der Heißleim nur für die unmittelbare Erzeugung einer Klebestelle zwischen zwei Behältern geeignet ist. Klebstoffe im Sinne der Erfindung sind schließlich auch Mehrschichtmaterialien, z.B. solche aus wenigstens einem Trägermaterial, das so mit einem Klebstoff beschichtet ist, dass eine Klebestelle zwischen zwei Behältern herstellbar ist. Typisch sind diese Mehrschichtmaterialien als Pads gestaltet, die zweiseitig haftend oder klebend ausgebildet sind.

Bevorzugt wird ein Klebstoff ausgewählt, dessen Klebkraft ein Lösen des Behälters aus einem Gebinde von Hand ermöglicht. Insbesondere UV-härtende Klebstoffe sind geeignet, weil die Klebkraft, die der Klebstoff an der Klebestelle entwickelt, durch die Zusammensetzung des Klebstoffs und die Intensität der Aushärtung gut eingestellt werden kann. Das Auftragen des Klebstoffs erfolgt bevorzugt mittels Düsen, die den meist flüssigen Klebstoff unmittelbar auf einen Behälter zu einem oder mehreren Klebepunkten aufbringen oder aufsprühen. Ebenfalls bevorzugt wird der Klebstoff auf dem Behälter punkt- oder linienförmig oder in einem Muster aus Punkten und/oder Linien aufgetragen.

Das Festlegen zum Bilden eines Gebindes erfolgt mittels dem auf wenigstens einem Behälter angebrachten Klebepunkt, insbesondere durch Andrücken oder Anpressen der beiden Behälter aneinander, wobei der Klebepunkt die beiden Behälter an einer Klebestelle verbindet. Auf den zweiten Behälter kann dabei ebenfalls Klebstoff an der Stelle aufgetragen sein, an der der erste Behälter in Anlage kommt, so dass eine Klebestelle aus zwei Klebepunkten aufgebaut sein kann. Bevorzugt verbinden die Klebestellen die Gebinde unmittelbar miteinander. Weiter bevorzugt stellen die Klebestellen die ausschließliche oder alleinige Verbindung der Behälter eines Gebindes dar.

Bei einer vorteilhaften Weiterbildung des erfindungsgemäßen Verfahrens wird der Behälter, der einen verstärkten Wandabschnitt aufweist nach dem Herstellen so ausgerichtet, dass der Klebstoff, insbesondere mittels einer Vorrichtung zum Auftragen des Klebstoffs, auf den verstärkten Wandabschnitt aufgetragen wird. Das Ausrichten der Behälter erfolgt durch an sich bekannte Mittel zum Rotieren von Behältern. Dafür notwendige Sensoren, die eine unterschiedliche Materialstärke in der Behälterwand detektieren können, sind ebenfalls bekannt.

Besonders bevorzugt wird anschließend der erste Behälter, der einen Klebepunkt auf dem verstärkten Wandabschnitt aufweist, mit einem zweiten Behälter zur Bildung des Gebindes gefügt, üblicherweise, indem die Behälter aneinander gedrückt werden und - falls erforderlich - der Klebstoff, der nun an beiden Behältern anliegt, zu einer Klebestelle ausgehärtet oder vernetzt wird.

Nach einer bevorzugten Weiterbildung der Erfindung erfolgt das Auftragen des Klebstoffs über den gesamten Umfang des Behälters, besonders bevorzugt in gleichbleibender Höhe. Dabei kann der Klebstoff als durchgängiger Strang oder aber als eine Reihe von Klebepunkten aufgetragen werden. Bei einer entsprechenden Ausgestaltung des Verfahrens kann ein Ausrichten vor dem Klebstoffauftrag und/oder bei dem Bilden des Gebindes entfallen.

Bei einer bevorzugten Weiterbildung des erfindungsgemäßen Verfahrens erfolgt das Kühlen des mindestens einen Teilbereichs des Vorformlings durch einen Kühlgasstrom, wodurch in besonders einfacher Weise und ohne die Gefahr des Verformens des Vorformlings durch direkten Kontakt mit einer Kühlvorrichtung die Temperatur wenigstens eines Teilbereichs des Vorformlings gesenkt werden kann. Bei dem Kühlgas kann es sich zunächst um ein beliebiges Gas bzw. Gasgemisch handeln. Bevorzugt handelt es sich dabei um Stickstoff, Luft oder ein Sterilgas zur Verwendung im Zusammenhang mit Hygieneanwendungen. Ganz besonders bevorzugt handelt es sich bei dem Kühlgas um Druckluft, die vorzugsweise nicht gesondert gekühlt, sondern lediglich der Umgebung entnommen wurde. Besonders vorteilhaft ist die Verwendung eines Gases, insbesondere von Luft, mit einem erhöhten Feuchteanteil, wodurch in einfacher Weise die Kühlwirkung verbessert werden kann.

Bei einer ebenfalls bevorzugten Weiterbildung des erfindungsgemäßen Verfahrens wird der Vorformling während des Kühlens gedreht, so dass ein ringförmiger gekühlter Teilbereich an dem Vorformling gebildet wird, wodurch in besonders einfacher Weise ein den gesamten Umfang des aus dem Vorformlings gebildeten Behälters umgebender, verstärkter Wandabschnitt erhalten werden kann. Dabei erfolgt die Drehung des Vorformlings bevorzugt um eine Mittellängsachse, insbesondere entlang der Höhe des daraus zu formenden Behälters und/oder durch den Mittelpunkt einer Öffnung des Behälters. Insbesondere wird zur Bildung eines ringförmigen, gekühlten Teilbereichs ein Kühlgasstrom auf gleichbleibender Höhe auf einen Teilabschnitt des Vorformlings gerichtet.

Nach einer vorteilhaften Weiterbildung des erfindungsgemäßen Verfahrens wird der Vorformling während des Kühlens rotierend entlang wenigstens einer Gasdüsenanordnung, insbesondere wenigstens einer Schlitzdüse geführt. Dabei ist die Gasdüsenanordnung bevorzugt rechtwinklig zur Bewegungsrichtung des Vorformlings angeordnet, wodurch der Vorformling bei einem Vorbeilaufen an der Gasdüsenanordnung in einem gleichbleibenden Teilbereich gekühlt wird. Grundsätzlich ist jedoch auch ein stationäres Kühlen eines Teilbereichs eines Vorformlings für eine bestimmte Dauer möglich. Besonders bevorzugt handelt es sich bei der Gasdüsenanordnung um eine lineare Anordnung von Gasdüsen. Dabei ist sowohl möglich, lediglich eine Gasdüsenanordnung zu verwenden, die insbesondere auf einen Teilbereich des Vorformlings zuweisend angeordnet ist, oder aber mehrere Gasdüsenanordnungen auf den Vorformling zu richten, insbesondere von zwei sich in Bezug zum Vorformling gegenüberliegenden Seiten. Besonders bevorzugt werden zwei Gasdüsenanordnungen zur Bildung einer einzigen Kühlzone verwendet.

Gemäß einer bevorzugten Ausgestaltung des erfindungsgemäßen Verfahrens wird durch das Kühlen die Temperatur des wenigstens einen gekühlten Teilbereichs gegenüber dem restlichen Vorformling um wenigstens 1°C, bevorzugt wenigstens 2°C und besonders bevorzugt um wenigstens 5°C verringert. Ebenfalls bevorzugt erzeugt das Kühlen eine Temperaturdifferenz des gekühlten Teilbereichs des Vorformlings gegenüber dem übrigen Vorformling von zwischen 1°C und 20°C, besonders bevorzugt zwischen 2°C und 10°C und ganz besonders bevorzugt zwischen 3°C und 8°C.

Bei einer vorteilhaften Weiterbildung des erfindungsgemäßen Verfahrens wird die Materialstärke des verstärkten Wandabschnitts des Behälters gegenüber der übrigen Behälterwand über die Dauer der Kühlung mit dem Kühlgasstrom und/oder über den Kühlgasdruck bzw. die Kühlgasflussrate geregelt, wodurch in besonders einfacher Weise die Temperatur und somit auch die Materialeigenschaften des gekühlten Teilbereich des Vorformlings eingestellt werden können.

Insbesondere bevorzugt werden die Dauer und/oder der Kühlgasdruck bzw. die Kühlgasflussrate derart gewählt, dass der verstärkte Wandabschnitt eine gegenüber der übrigen Behälterwand um wenigstens 30%, bevorzugt wenigstens 50% und besonders bevorzugt wenigstens 100% größere Materialstärke aufweist. Ebenfalls bevorzugt beträgt die Dicke eines verstärkten Wandabschnitts des Behälters gegenüber der übrigen Behälterwand zwischen 130% und 300%, besonders bevorzugt zwischen 150% und 250% und ganz besonders bevorzugt zwischen 150% und 200%.

Das jeweils zu wählende Ausmaß der Wandverstärkung wird der Fachmann in Abhängigkeit von der Größe und Form des Behälters sowie der Wanddicke auswählen. Je dicker die Behälterwand ist, desto geringer ist die erforderliche Wandverstärkung. Bevorzugt weist die Behälterwand eine Wandstärke zwischen 0,1 mm und 0,2 mm, besonders bevorzugt von 0,15 mm auf, so dass die Wandstärke in einem verstärkten Wandabschnitt bevorzugt mindestens 0,225 mm und höchstens 0,3 mm beträgt.

Der Vorformling zur Herstellung des Behälters kann zunächst eine beliebige Form aufweisen. Bevorzugt ist der Vorformling dabei aus einem thermoplastischen Kunststoff, wie Polyethylenterephthalat (PET) oder Polypropylen (PP) gebildet. Bevorzugt weist der bereitgestellte Vorformling wenigstens in dem die Behälterwand bildenden Bereich eine konstante Materialstärke auf und/oder ist einstückig gebildet. Der die Behälterwand bildende Bereich des Vorformlings ist der Bereich, der lediglich die Behälterwand, nicht jedoch den Behälterboden oder den Bereich der Behälteröffnung bildet. Besonders bevorzugt weist der Vorformling in allen Bereichen außer einem vorgefertigten Gewindebereich eine konstante Materialstärke auf.

Ebenfalls bevorzugt weist auch der zweite Behälter wenigstens einen verstärkten Wandabschnitt auf, der bei dem Bilden des Gebindes mittels wenigstens eines Klebepunktes mit dem ersten Behälter über eine Klebestelle verklebt wird, da die Kräfte, die zum Zerreißen des Behälters führen, grundsätzlich auf beide Behälter wirken. Dabei können beide Behälter korrespondierende Klebepunkte aufweisen, die zur Bildung der Klebestelle aneinander angeordneten werden.

Bei einer besonders bevorzugten Ausgestaltung der Erfindung sind sämtliche Behälter eines Gebindes identisch gebildet und weisen insbesondere gleich positionierte und/oder dimensionierte verstärkte Wandabschnitte auf. Ganz besonders bevorzugt weist jeder Behälter im Gebinde zwei verstärkte Wandabschnitte auf, wobei jeweils zwei nebeneinanderliegende Behälter über wenigstens je eine Klebestelle pro verstärktem Wandabschnitt miteinander verbunden sind.

Bei einer bevorzugten Ausgestaltung der erfindungsgemäßen Vorrichtung weist die Gasdüsenanordnung wenigstens eine Schlitzdüse auf, die besonders bevorzugt rechtwinklig zu einer Bewegungsrichtung der Vorformlinge in der Vorrichtung angeordnet ist und/oder deren Länge bevorzugt in Bewegungsrichtung der Vorformlinge wenigstens dem Umfang, besonders bevorzugt wenigstens 200% des Umfangs und ganz besonders bevorzugt einem Vielfachen des Umfangs der Vorformlinge entspricht. Bei einer Ausgestaltung der erfindungsgemäßen Vorrichtung, bei der zwei Gasdüsenanordnungen beidseitig zum Vorformling angeordnet sind, beträgt die Länge der Gasdüsenanordnung in Bewegungsrichtung der Vorformlinge bevorzugt wenigstens 50% des Umfangs, besonders bevorzugt wenigstens 100% des Umfangs und ganz besonders bevorzugt wenigstens einem Vielfachen der Hälfte des Umfangs der Vorformlinge.

Ebenfalls bevorzugt ist die Gasdüsenanordnung wenigstens als eine lineare Anordnung von mehreren Einzeldüsen gebildet, die besonders bevorzugt als Bohrungen mit einem Durchmesser von 0,5 - 4 mm, vorzugsweise 1 - 2 mm gebildet sind. Bevorzugt sind alle Einzeldüsen an einem Trägerkörper angeordnet, in dessen Inneren besonders bevorzugt das Kühlgas zu den Gasdüsen geleitet wird. Bei einer vorteilhaften Ausgestaltung sind mindestens 3, bevorzugt mindestens 5 und besonders bevorzugt mindestens 10 Gasdüsen linear zueinander angeordnet. Bevorzugt weist jede Einzeldüse lediglich eine Öffnung auf, die in zwei Raumrichtungen im Wesentlichen eine gleiche Ausdehnung hat und besonders bevorzugt rund ist.

Bei einer bevorzugten Ausgestaltung ist der verstärkte Wandabschnitt, insbesondere in Richtung der Höhe des Behälters, mindestens 3%, besonders bevorzugt mindestens 5% und ganz besonders bevorzugt mindestens 10% größer als der Durchmesser der Klebestelle. Ebenfalls bevorzugt macht der verstärkte Wandabschnitt höchstens 50%, besonders bevorzugt höchstens 25% und ganz besonders bevorzugt höchstens 10% der Wand bzw. der Oberfläche des Behälters aus.

Nach einer besonders bevorzugten Ausführung der Erfindung ist der Übergang von der Wandverstärkung zur Behälterwand als sich verjüngender Übergangsbereich ausgestaltet. Insbesondere bevorzugt ist dabei die Form eines flacher Sinus im Übergangsbereich. Gemäß dem erfindungsgemäßen Verfahren wird in besonders einfacher Weise ein solcher Übergang erreicht, da zwischen dem gekühlten Teilbereich und dem übrigen Vorformling sich ein Temperaturgradient bildet, der zu einem entsprechenden Ansteigen der Materialstärke zu den verstärkten Wandabschnitten hin führt. Ebenfalls bevorzugt ist die Wandverstärkung im Bereich eines Abrollrings des Behälters ausgebildet.

Mehrere Ausführungsbeispiele der erfindungsgemäßen Vorrichtung sowie des erfindungsgemäßen Verfahrens werden nachstehend mit Bezug auf die Zeichnungen näher erläutert. In den Figuren zeigen:
Fig. 1 eine schematische Ansicht eines Verfahrens zur Herstellung eines Behälters mit einem verstärkten Wandabschnitt aus einem Vorformling,
Fig. 2 eine schematische Ansicht eines Verfahrens zur Herstellung eines Gebindes aus Behältern mit jeweils einem verstärkten Wandabschnitt und
Fig. 3 eine schematische Ansicht eines weiteren Verfahrens zur Herstellung eines Gebindes aus Behältern mit jeweils zwei verstärkten Wandabschnitten.

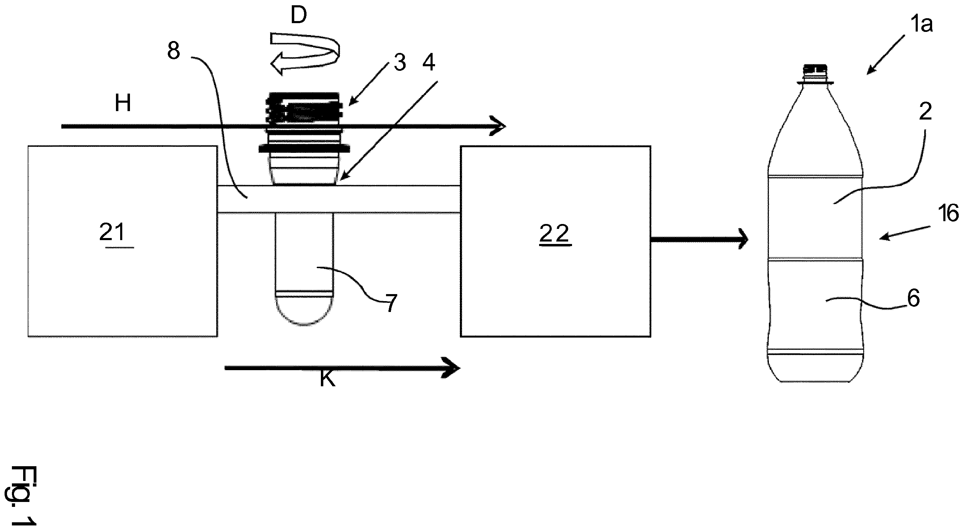

Bei einem in Fig. 1 schematisch dargestellten Verfahren wird zur Herstellung einer ersten Flasche 1a aus PET ein Vorformling 3 mittels eines Ofens 21 erhitzt. Während des Erhitzens H wird der Vorformling 3 in einer Drehrichtung D gedreht.

Dabei ist im Bereich des Ofens 21 eine Kühlgasdüsenanordnung derart angeordnet, dass sich eine wenigstens in Bezug zu einer Bewegungsrichtung des Vorformlings 3 während des Erhitzens H räumlich klar definierte Kühlzone 8 bildet, in der mittels eines aus der Kühlgasdüsenanordnung auf den Vorformling 3 gerichteten Kühlgasstroms ein Teilbereich 4 des Vorformlings 3 gekühlt wird.

Die Kühlgasdüsenanordnung ist dabei als 4-Kantrohr mit einer Reihe von Bohrungen mit einem Durchmesser von 1 mm als Kühlgasdüsen gebildet. Als Kühlgas wird Druckluft mit einem erhöhten Luftfeuchtigkeitsanteil bei Umgebungstemperatur eingesetzt.

Dabei wird der Kühlgasstrom in der Kühlzone 8 derart geregelt, dass nach Beendigung des Erhitzens H sowie des zumindest teilweise zeitgleichen Kühlens K der Vorformling 3 einen gekühlten Teilbereich 4 in einem bei der Herstellung der Flasche 1a die Behälterwand bildenden Bereich 7 des Vorformlings 3 aufweist, der gegenüber den übrigen Bereichen des Vorformlings 3 eine um etwa 5 °C geringere Temperatur aufweist.

Anschließend wird aus dem erhitzten Vorformling 3 mit dem gekühlten Teilbereich 4 mittels einer Streckblasvorrichtung 22 eine erste Flasche 1a hergestellt, wobei diese im Bereich der Behälterwand 16 einen verstärkten Wandabschnitt 2 aufweist, der aus dem gekühlten Teilbereich 4 des Vorformlings 3 gebildet ist.

Die Wandstärke der Flasche 1a nach dem Streckblasen beträgt in dem verstärkten Wandabschnitt 2 zwischen 0,255 mm und 0,3 mm und in der übrigen Behälterwand 6 etwa 0,15 mm. Dabei ist der Übergangsbereich zwischen dem verstärkten Wandabschnitt 2 und der übrigen Behälterwand 6 als kontinuierlicher Übergangsbereich, insbesondere in Form eines flachen Sinus gebildet, dessen genaue Form maßgeblich durch den Temperaturgradienten zwischen dem gekühlten Teilbereich 4 und dem übrigen Teil des Vorformlings 3 bestimmt wird.

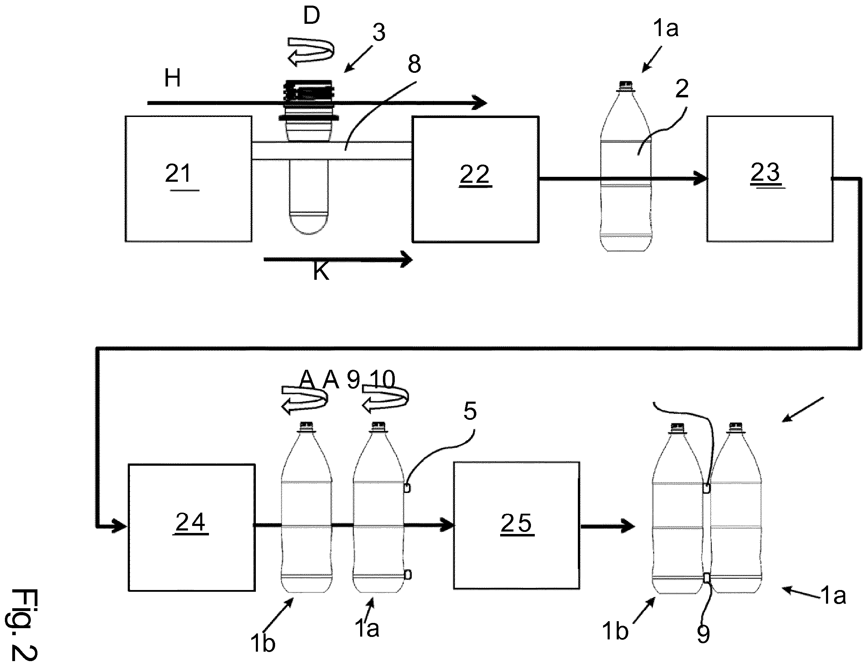

Bei dem in Fig. 2 schematisch dargestellten Verfahren zur Herstellung eines Gebindes 10 werden zunächst mehrere Flaschen 1a, b wie vorstehend beschrieben hergestellt und anschließend in mehreren Vorrichtungen zur weiteren Behandlung 23 der Flaschen 1a, b unter anderem befüllt, verschlossen, etikettiert und/oder bedruckt. Anschließend wird mittels einer Klebemittelapplikationseinheit 24 auf wenigstens eine der Flaschen 1a des Gebindes 10 ein Klebepunkt 5 aus einem flüssigen Klebstoff aufgetragen, wobei zuvor eine Ausrichtung A der ersten und/oder einer zweiten Flasche 1a, b erfolgt, so dass die Flaschen 1a, b bei einer nachfolgenden Bildung des Gebindes 10 eine gewünschte Ausrichtung aufweisen. Der Klebstoffauftrag erfolgt dabei im Bereich eines verstärkten Wandabschnitts 2 der Flasche 1a, b.

Nachfolgend wird mittels einer Vorrichtung zum Zusammenfügen 25 eine Ausrichtung, ein Verdichten und/oder eine Gruppieren mehrerer Flaschen 1a ,b sowie ein Verbinden der Flaschen 1a, b zu einem Gebinde 10 vorgenommen. Dabei werden mehrere Flaschen 1a, b mittels auf wenigstens einer Flasche 1a angeordneten Klebepunkten 5 derart aneinander angeordnet und der Klebstoff ausgehärtet bzw. abkühlen gelassen, dass sich eine zwei Flaschen 1a, b verbindende Klebestelle 9 bildet. Zusätzlich kann während des Zusammenfügens auch ein Tragegriff an dem Gebinde 10 angeordnet, insbesondere mit diesem verklebt werden.

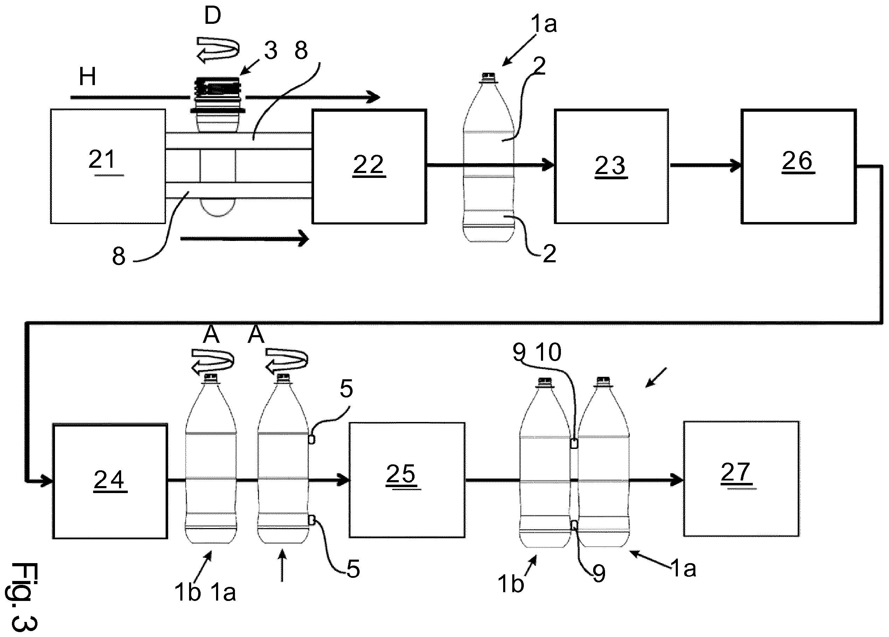

Bei dem in Fig. 3 dargestellten Verfahren wird der Vorformling 3 mittels zwei übereinander angeordneten Kühlzonen 8 in zwei voneinander getrennten Teilbereichen 4 gekühlt, wodurch eine aus diesem Vorformling 3 hergestellte Flasche 1a ebenfalls zwei verstärkte Wandabschnitte 2 aufweist.

Als zusätzliche Verfahrensschritte werden bei dem in der Fig. 3 dargestellten Verfahren dem Auftragen des Klebstoffes vorausgehend die fertiggestellten, befüllten und zum Zusammenfügen in einem Gebinde 10 vorbereiten Flaschen 1a, b mittels einer Inspektionsvorrichtung 26 auf ihre Fehlerfreiheit und/oder korrekte Befüllung untersucht und fehlerhafte Flaschen 1a, b ausgeschleust. Schließlich erfolgt nach dem Herstellen der Gebinde 10 ein automatisches Palettieren mittels einer Palettiervorrichtung 27.

### Bezugszeichenliste

- 1a: erster Behälter
- 1b: zweiter Behälter
- 2: verstärkter Wandabschnitt
- 3: Vorformling
- 4: gekühlter Teilbereich
- 5: Klebepunkt
- 6: übrige Behälterwand
- 7: Behälterwand bildender Bereich
- 8: Kühlzone
- 9: Klebestelle
- 10: Gebinde
- 16: Behälterwand
- 21: Vorrichtung zum Erhitzen
- 22: Streckblasvorrichtung
- 23: Weitere Behandlungsvorrichtungen
- 24: Vorrichtung zum Klebstoffauftrag
- 25: Mittel zum Zusammenfügen
- 26: Inspektionsvorrichtung
- 27: Palettiervorrichtung
- A: Ausrichten
- D: Drehrichtung
- H: Heizen
- K: Kühlen

## Patentansprüche

1. Verfahren zum Herstellen eines Gebindes (10) mit mindestens zwei Behältern (1a, b), wobei mindestens ein Behälter (1a) einen verstärkten Wandabschnitt (2) aufweist, mit den Schritten
- Bereitstellen eines Vorformlings (3) für einen Behälter (1a, b),
- Erhitzen (H) des Vorformlings (3) sowie Kühlen (K) mindestens eines Teilbereichs (4) des Vorformlings (3),
- Herstellen eines ersten Behälters (1a) aus dem Vorformling (3), wobei der erste Behälter (1a) einen aus dem gekühlten Teilbereich (4) des Vorformlings (3) gebildeten verstärkten Wandabschnitt (2) aufweist,
- Auftragen eines Klebstoffs zum Erzeugen wenigstens eines Klebepunktes (5) im Bereich des verstärkten Wandabschnitts (2) des ersten Behälters (1a) sowie
- Bilden eines Gebindes (10) durch Festlegen eines zweiten Behälters (1b) an dem wenigstens einen Klebepunkt (5) des ersten Behälters (1a).

2. Verfahren nach Anspruch 1, **dadurch gekennzeichnet, dass** das Kühlen (K) des mindestens einen Teilbereichs (4) des Vorformlings (3) durch einen Kühlgasstrom erfolgt.

3. Verfahren nach Anspruch 1 oder 2, **dadurch gekennzeichnet, dass** der Vorformling (3) während des Kühlens (K) gedreht wird, so dass ein ringförmiger gekühlter Teilbereich (4) an dem Vorformling (3) gebildet wird.

4. Verfahren nach wenigstens einem der vorhergehenden Ansprüche, **dadurch gekennzeichnet, dass** der Vorformling (3) während des Kühlens (K) rotierend entlang wenigstens einer Gasdüsenanordnung, insbesondere wenigstens einer Schlitzdüse geführt wird.

5. Verfahren nach wenigstens einem der vorhergehenden Ansprüche, **dadurch gekennzeichnet, dass** durch das Kühlen (K) die Temperatur des wenigstens einen gekühlten Teilbereichs (4) gegenüber dem restlichen Vorformling (3) um wenigstens 2°C und bevorzugt wenigstens 5°C verringert wird.

6. Verfahren nach wenigstens einem der vorhergehenden Ansprüche, **dadurch gekennzeichnet, dass** die Materialstärke des verstärkten Wandabschnitts (2) des Behälters (1a, b) gegenüber der übrigen Behälterwand (6) über die Dauer des Kühlens (K) mit dem Kühlgasstrom und/oder über den Kühlgasdruck geregelt wird.

7. Verfahren nach Anspruch 6, **dadurch gekennzeichnet, dass** die Dauer und/oder der Kühlgasdruck derart gewählt werden, dass der verstärkte Wandabschnitt (2) eine gegenüber der übrigen Behälterwand (6) um wenigstens 30%, bevorzugt wenigstens 50% und besonders bevorzugt wenigstens 100% größere Materialstärke aufweist.

8. Verfahren nach wenigstens einem der vorhergehenden Ansprüche, **dadurch gekennzeichnet, dass** der bereitgestellte Vorformling (3) wenigstens in dem die Behälterwand (16) bildenden Bereich (7) eine konstante Materialstärke aufweist und/oder einstückig gebildet ist.

9. Verfahren nach wenigstens einem der vorhergehenden Ansprüche, **dadurch gekennzeichnet, dass** das Herstellen des ersten Behälters (1a), bevorzugt aller Behälter (1a, b) durch Streckblasen eines erhitzten Vorformlings (3) mit wenigstens einem gekühlten Teilbereich (4) erfolgt.

10. Verfahren nach wenigstens einem der vorhergehenden Ansprüche, **dadurch gekennzeichnet, dass** der zweite Behälter (1b) wenigstens einen verstärkten Wandabschnitt (2) aufweist, der bei dem Bilden des Gebindes (10) mittels wenigstens eines Klebepunktes (5) mit dem ersten Behälter (1a) verklebt wird.

11. Vorrichtung zum Herstellen eines Gebindes (10) mit mindestens zwei Behältern (1a, b), umfassend
- eine Vorrichtung zum Erhitzen (21) von Vorformlingen (3),
- eine Streckblasvorrichtung (22) zum Herstellen von Behältern (1a, b) aus den erhitzten Vorformlingen (3),
- eine Vorrichtung zum Auftragen eines Klebstoffs (24) zum Erzeugen wenigstens eines Klebepunktes (5) an den Behältern (1a, b) sowie
- Mittel zum Zusammenfügen (25) der Behälter (1a, b) mittels des Klebepunktes (5) zu einem Gebinde (10),
**dadurch gekennzeichnet, dass**
- wenigstens eine Gasdüsenanordnung derart gestaltet ist, dass damit wenigstens eine Kühlzone (8) zum Kühlen (K) eines Teilbereichs (4) eines erhitzten Vorformlings (3) gebildet wird, wobei
- die Behälter (1a, b) einen aus dem gekühlten Teilbereich des Vorformlings (3) gebildeten verstärkten Wandabschnitt (2) aufweist, und wobei
- ein Klebstoff (24) zum Erzeugen wenigstens eines Klebepunktes (5) im Bereich des verstärkten Wandabschnitts (2) der Behälter (1a, b) auftragbar ist.

12. Vorrichtung nach Anspruch 11, **dadurch gekennzeichnet, dass** die Gasdüsenanordnung wenigstens eine Schlitzdüse aufweist, die rechtwinklig zu einer Bewegungsrichtung der Vorformlinge (3) in der Vorrichtung angeordnet ist und deren Länge in Bewegungsrichtung der Vorformlinge (3) wenigstens dem Umfang der Vorformlinge (3) entspricht.

13. Vorrichtung nach Anspruch 11, **dadurch gekennzeichnet, dass** die Gasdüsenanordnung wenigstens eine lineare Anordnung von mehreren Gasdüsen aufweist, die rechtwinklig zu einer Bewegungsrichtung der Vorformlinge (3) in der Vorrichtung angeordnet sind, wobei die Gasdüsen bevorzugt als Bohrungen mit einem Durchmesser von 0,5 - 4 mm gebildet sind.

14. Gebinde (10), aufweisend mindestens zwei Behälter (1a, b) mit jeweils einer Behälterwand (16), wobei die zwei Behälter (1a, b) durch eine Klebestelle (9) miteinander verbunden sind,
**dadurch gekennzeichnet, dass**
die Behälterwand (16) wenigstens eines Behälters (1a, b) im Bereich der Klebestelle (9) einen verstärkten Wandabschnitt (2) aufweist, der durch einen gekühlten Teilbereich (4) eines Vorformlings (3) gegenüber dem restlichen Vorformling (3) beim Herstellen des Behälters (1a, b) gebildet wurde.

## Claims

1. Method for producing a multipack (10) comprising at least two containers (1a, b), wherein at least one container (1a) has a reinforced wall portion (2), with the steps:
- providing a perform (3) for a container (1a, b),
- heating (H) the perform (3) and cooling (K) of at least one partial region (4) of the perform (3),
- producing a first container (1a) from the perform (3), wherein the first container (1a) comprises a reinforced wall portion (2) formed from the cooled partial region (4) of the perform (3),
- applying an adhesive so as to produce at least one adhesive point (5) in the region of the reinforced wall portion (2) of the first container (1a), and
- forming a multipack (10) by fixing a second container (1b) to the at least one adhesive point (5) of the first container (1a).

2. Method according to claim 1, **characterised in that** the cooling (K) of the at least one partial region (4) of the perform (3) takes place by means of a cooling gas flow.

3. Method according to claim 1 or 2, **characterised in that** the perform (3) is rotated during the cooling (K), such that a ring-shaped cooled region (4) is formed on the perform (3).

4. Method according to any one of the preceding claims, **characterised in that** the perform (3) is conveyed during the cooling (K) rotating along at least one gas nozzle arrangement, in particular at least one slot nozzle.

5. Method according to any one of the preceding claims, **characterised in that**, due to the cooling (K), the temperature of the at least one cooled partial region (4) is reduced in relation to the remainder of the perform (3) by at least 2 °C and for preference by at least 5 °C.

6. Method according to any one of the preceding claims, **characterised in that** the material thickness of the reinforced wall portion (2) of the container (1a, b) is reduced in relation to the remainder of the container wall (6) over the duration of the cooling (K) with the cooling gas flow and/or is regulated by the cooling gas pressure.

7. Method according to claim 6, **characterised in that** the duration and/or the cooling gas pressure are selected in such a way that the reinforced wall portion (2) exhibits a material thickness which is greater in relation to the remainder of the container wall (6) by at least 30%, preferably by at least 50%, and for particular preference at least 100%.

8. Method according to any one of the preceding claims, **characterised in that** the perform (3) provided exhibits a constant material thickness at least in the region (7) forming the container wall (16), and/or is formed as one piece.

9. Method according to any one of the preceding claims, **characterised in that** the production of the first container (1a), and preferably of all containers (1a, b) takes place by stretch blow moulding of a heated perform (3) with at least one cooled partial region (4).

10. Method according to any one of the preceding claims, **characterised in that** the second container (1b) has at least one reinforced wall portion (2), which during the forming of the multipack (10) is adhesively bonded to the first container (1a) by means of at least one adhesive point (5).

11. Device for producing a multipack (10) with at least two containers (1a, b), comprising
- a device for heating (21) performs (3),
- a stretch blow moulding device (22) for producing containers (1a, b) from the heated performs (3),
- a device for applying an adhesive (24) for producing an adhesive point (5) on the containers (1a, b), and
- means for assembling (25) the containers (1a, b) by means of the adhesive point (5) to a multipack (10),
**characterised in that**
- at least one gas nozzle arrangement is configured in such a way that with this at least one cool zone (8) is formed for the cooling (K) of a partial region (4) of a heated perform (3), wherein
- the container (1a, b) comprises a reinforced wall portion (2) formed from the cooled partial region of the perform (3), and wherein
- an adhesive (24) for producing at least one adhesive point (5) can be applied in the region of the reinforced wall portion (2) of the containers (1a, b).

12. Device according to claim 11, **characterised in that** the gas nozzle arrangement comprises at least one slot nozzle, which is arranged at right angles to a direction of movement of the performs (3) in the device, and of which the length in the direction of movement of the performs (3) corresponds at least to the circumference of the performs (3).

13. Device according to claim 11, **characterised in that** the gas nozzle arrangement comprises at least one linear arrangement of several gas nozzles, which are arranged in a direction of movement of the performs (3) in the device, wherein the gas nozzles are preferably formed as holes with a diameter of 0.5 - 4 mm.

14. Multipack (10), comprising at least two containers (1a, b) with in each case a container wall (16), wherein the two containers (1a, b) are connected to one another by an adhesive point (9),
**characterised in that**
the container wall (16) of at least one container (1a, b) exhibits a reinforced wall portion (2) in the region of the adhesive point (9), which was formed in relation to the remainder of the perform (3) by a cooled partial region (4) of the perform (3) during the producing of the container (1a, b).

## Revendications

1. Procédé de fabrication d'une unité d'emballage (10) avec au moins deux contenants (1a, b), dans lequel au moins un contenant (1a) présente une section de paroi (2) renforcée, avec les étapes
- la fourniture d'une préforme (3) pour un contenant (1a, b),
- le chauffage (H) de la préforme (3) ainsi que le refroidissement (K) au moins d'une zone partielle (4) de la préforme (3),
- la fabrication d'un premier contenant (1a) à partir de la préforme (3), dans lequel le premier contenant (1a) présente une section de paroi (2) renforcée formée à partir de la zone partielle (4) refroidie de la préforme (3),
- l'application d'une colle pour la génération au moins d'un point de colle (5) dans la zone de la section de paroi (2) renforcée du premier contenant (1a) ainsi que
- la formation d'une unité d'emballage (10) par la fixation d'un second contenant (1b) à l'au moins un point de colle (5) du premier contenant (1a).

2. Procédé selon la revendication 1, **caractérisé en ce que** le refroidissement (K) d'au moins une zone partielle (4) de la préforme (3) est effectué par un courant de gaz de refroidissement.

3. Procédé selon la revendication 1 ou 2, **caractérisé en ce que** la préforme (3) est tournée pendant le refroidissement (K) de sorte qu'une zone partielle (4) refroidie annulaire soit formée au niveau de la préforme (3).

4. Procédé selon au moins l'une des revendications précédentes, **caractérisé en ce que** la préforme (3) est guidée pendant le refroidissement (K) de manière à pouvoir tourner le long d'au moins un agencement de buse de gaz, en particulier au moins d'une buse à fente.

5. Procédé selon au moins l'une des revendications précédentes, **caractérisé en ce que** par le refroidissement (K) la température d'au moins une zone partielle (4) refroidie par rapport à la préforme (3) restante est diminuée d'au moins 2 °C et de préférence d'au moins 5 °C.

6. Procédé selon au moins l'une des revendications précédentes, **caractérisé en ce que** l'épaisseur de matériau de la section de paroi (2) renforcée du contenant (1a, b) par rapport à la paroi de contenant (6) restante est régulée par l'intermédiaire de la durée du refroidissement (K) avec le courant de gaz de refroidissement et/ou l'intermédiaire de la pression de gaz de refroidissement.

7. Procédé selon la revendication 6, **caractérisé en ce que** la durée et/ou la pression de gaz de refroidissement sont choisies de telle manière que la section de paroi (2) renforcée présente une épaisseur de matériau supérieure par rapport à la paroi de contenant (6) restante d'au moins 30 %, de préférence d'au moins 50 % et de manière particulièrement préférée d'au moins 100 %.

8. Procédé selon au moins l'une des revendications précédentes, **caractérisé en ce que** la préforme (3) fournie présente au moins dans la zone (7) formant la paroi de contenant (16) une épaisseur de matériau constante et/ou est formée d'un seul tenant.

9. Procédé selon au moins l'une des revendications précédentes, **caractérisé en ce que** la fabrication du premier contenant (1a), de préférence de tous les contenants (1a, b) est effectuée par étirage-soufflage d'une préforme (3) réchauffée avec au moins une zone partielle (4) refroidie.

10. Procédé selon au moins l'une des revendications précédentes, **caractérisé en ce que** le second contenant (1b) présente au moins une section de paroi (2) renforcée qui est collée lors de la formation de l'unité d'emballage (10) au moyen d'au moins un point de colle (5) au premier contenant (1a).

11. Dispositif de fabrication d'une unité d'emballage (10) avec au moins deux contenants (1a, b) comprenant
- un dispositif de chauffage (21) de préformes (3),
- un dispositif d'étirage-soufflage (22) de fabrication de contenants (1a, b) à partir des préformes (3) réchauffées,
- un dispositif d'application d'une colle (24) pour la génération d'au moins un point de colle (5) au niveau des contenants (1a, b) ainsi que
- des moyens d'assemblage (25) des contenants (1a, b) au moyen du point de colle (5) en une unité d'emballage (10),
**caractérisé en ce que**
- au moins un agencement de buse de gaz est conçu de telle manière qu'avec celui-ci au moins une zone de refroidissement (8) pour le refroidissement (K) d'une zone partielle (4) d'une préforme (3) réchauffée soit formée, dans lequel
- les contenants (1a, b) présentent une section de paroi (2) renforcée formée à partir de la zone partielle refroidie de la préforme (3), et dans lequel
- une colle (24) peut être appliquée pour la génération d'au moins un point de colle (5) dans la zone de la section de paroi (2) renforcée des contenants (1a, b).

12. Dispositif selon la revendication 11, **caractérisé en ce que** l'agencement de buse de gaz présente au moins une buse à fente qui est agencée à angle droit par rapport à un sens de déplacement des préformes (3) dans le dispositif et dont la longueur dans le sens de déplacement des préformes (3) correspond au moins à la périphérie des préformes (3).

13. Dispositif selon la revendication 11, **caractérisé en ce que** l'agencement de buse de gaz présente au moins un agencement linéaire de plusieurs buses de gaz qui sont agencées à angle droit par rapport à un sens de déplacement des préformes (3) dans le dispositif, dans lequel les buses de gaz sont formées de préférence en tant que perçages avec un diamètre de 0,5 à 4 mm.

14. Unité d'emballage (10), présentant au moins deux contenants (1a, b) avec respectivement une paroi de contenant (16), dans laquelle les deux contenants (1a, b) sont reliés entre eux par un joint de collage (9),
**caractérisée en ce que**
la paroi de contenant (16) au moins d'un contenant (1a, b) dans la zone du joint de collage (9) présente une section de paroi (2) renforcée qui a été formée par une zone partielle (4) refroidie d'une préforme (3) par rapport à la préforme (3) restante lors de la fabrication du contenant (1a, b).
